(19) Europäisches Patentamt
European Patent Office
Office européen des brevets

(11) Publication number : 0 639 621 A2

# (12) EUROPEAN PATENT APPLICATION

(21) Application number : 94305811.5

(22) Date of filing : 05.08.94

(30) Priority : 18.08.93 JP 203871/93
27.12.93 JP 331996/93
08.06.94 JP 126128/94

(43) Date of publication of application :
22.02.95 Bulletin 95/08

(84) Designated Contracting States :
DE FR GB

(51) Int. Cl.$^6$ : C08L 79/08, C08K 7/02

(71) Applicant : MITSUI TOATSU CHEMICALS, Inc.
2-5 Kasumigaseki 3-chome
Chiyoda-Ku Tokyo 100 (JP)

(72) Inventor : Yamashita, Wataru
3-42-7, Hirado,
Totsuka-Ku
Yokohama-Shi, Kanagawa-Ken 244 (JP)
Inventor : Asanuma, Tadashi
1071-2-202, Nakano-Cho,
Sakae-Ku
Yokohama-Shi, Kanagawa-Ken 247 (JP)
Inventor : Okawa, Yuichi
2882-1-22, Iijima-Cho,
Sakae-Ku
Yokohama-Shi, Kanagawa-Ken 244 (JP)
Inventor : Ishihara, Yuko
3-37-14, Nagasaka
Yokosuka-Shi, Kanagawa-Ken 240-01 (JP)
Inventor : Oikawa, Hideaki
3-42-7, Hirado,
Totsuka-Ku
Yokohama-shi, Kanagawa-ken 244 (JP)
Inventor : Matsuo, Mitsunori
2882, Iijima-Cho,
Sakae-Ku
Yokohama-Shi, Kanagawa-Ken, 244 (JP)
Inventor : Yamaguchi, Keizaburo
1627-92, Toke-Cho,
Midori-Ku
Chiba-Shi, Chiba-Ken, 267 (JP)
Inventor : Yamaguchi, Akihiro
1-13-24, Zaimoku-Za,
Kamakura-Shi
Kanagawa-Ken, 248 (JP)
Inventor : Tamai, Shoji
2-17, Mitsui Toatsu AP,
2882, Iijima-Cho,
Sakae-Ku, Yokohama-Shi, Kanagawa-Ken,244 (JP)

(74) Representative : Nicholls, Kathryn Margaret et al
MEWBURN ELLIS
York House
23 Kingsway
London WC2B 6HP (GB)

## (54) Polyimide-based resin composition.

(57) The present invention relates to a polyimide-based resin composition comprising a thermoplastic polyimide having good solubility in general purpose organic solvents and a fibrous reinforcement such as carbon fiber, glass fiber, aromatic polyamide fiber and/or a potassium titanate fiber, a process for preparing the resin composition and an injection molded article of the resin composition, and further relates to a polyimide-based composite obtained by molding the above soluble and thermoplastic polyimide in combination with a fibrous reinforcement and a process for molding the same.

The polyimide used for the invention can be applied as a surface modifier for the fibrous reinforcement particularly in the form of a solution and provide a fibrous reinforcement having a surface modified with the above polyimide.

EP 0 639 621 A2

The present invention relates to a polyimide-based resin composition, a process for preparing the resin composition and an injection molded article of the resin composition. More particularly, embodiments of the invention relate to a polyimide-based resin composition which is soluble and thermoplastic, especially to a composition comprising a thermoplastic polyimide having good solubility in general purpose organic solvents and a fibrous reinforcement such as carbon fiber, glass fiber, aromatic polyamide fiber and/or a potassium titanate fiber ; a process for preparing the polyimide-based resin composition ; and an injection molded article prepared from the polyimide-based resin composition.

The present invention further relates to a polyimide-based composite, and more particularly relates to a polyimide-based laminated composite obtained by molding the above polyimide in combination with a fibrous reinforcement and a process for molding the same.

The present invention still further relates to a fibrous reinforcement having a surface modified with the above polyimide.

The fibrous reinforcement having a surface modified with the above polyimide which can be used for the invention has an improved applicability. That is, polyimide used for the invention can be applied as a surface modifier for the fibrous reinforcement particularly in the form of a solution.

Conventionally, polyimide has a high heat resistance, is excellent in mechanical strengths and dimensional stability, and additionally has flame retardance and electrical insulation property. Thus, polyimide has been widely used in the field of electric and electronic appliances, space and aeronautic equipment and transport machinery. Various kinds of polyimide which exhibit outstanding properties have been conventionally developed. However, some polyimide has no distinct glass transition temperature although heat resistance is excellent and must be processed with a specific means such as sinter molding in the case of using is a molding material. Other polyimide has low glass transition temperature although processing ability is excellent, or is inferior to common engineering plastics in resistance to absorption of water and moisture. Thus, conventional polyimide has both merits and drawbacks in terms of property.

Particularly, low resistance to absorption of water and moisture is liable to cause problems in application to uses which require such resistance. For example, in the field of space and aeronautic equipment, polyimide is used under severe conditions such as high temperature and high humidity due to rapid change in weather and environmental conditions and resins having low resistance to water and moisture absorption have been known to drastically lower mechanical strengths and dimensional stability by water absorption. Also in the field of electric and electronic appliances, particularly in the field of semiconductor materials, situation is the same and the poor resistance leads to reduction of mechanical strengths and dimensional stability and additionally results in development of microcracks, bubble formation and reduction of electrical insulation in the case of using for a sealing material of an electronic circuit substrate.

Consequently, it has been strongly desired to develop a so-called ultra-super engineering plastic which is free from these problems.

In the investigation of polyimide having a fundamental skeleton of the formula (A) :

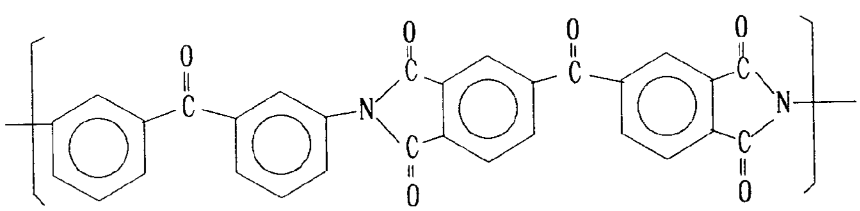

(A)

, the present inventors have blocked the reactivity of polymer chain end by capping the chain end and have found that such end-capping can regulate molecular weight of the polymer and that the end-capped polyimide obtained can be injection molded or extrusion formed (Japanese Laid-Open Patent Hei 02-018419). However, the polyimide has also poor solubility in the general purpose organic solvents although thermoplasticity is provided, and thus it has been difficult to impregnate fibrous reinforcements with a solution of the polyimide.

Further, the polyimide has led to the above problems because of low resistance to water and moisture absorption as compared with conventional engineering plastics.

One of the uses utilizing heat resistance and mechanical strengths of polyimide is to apply in the form of a composite material in combination with a glass fiber or carbon fiber. Non-thermoplastic polyimide is usually applied to such process. A fibrous material is generally impregnated with a solution of polyamic acid precursor of the polyimide, the solvent is removed by evaporation and thereafter imidization and curing are simultaneously carried out by hot compression molding (Japanese Laid-Open Patent SHO 60-240740 and 61-235437). The process, however, requires to carry out imidization and molding at the same time and is liable to emerge

voids and other defects due to water generated by imidization.

Utilization of thermoplastic polyimide has been proposed as a countermeasure against these difficulties (Japanese Laid-Open Patent HEI 01-113461 and 03-199234). In such a case, however, polyimide is insufficient in melt-flowability though heat-resistant and thermoplastic, and it has difficult to completely inhibit generation of voids and other defects as in the above process of using polyamic acid.

As mentioned above, known polyimide has problems of water generated in the imidization step, although good impregnation of fibrous materials can be carried out by using the solution of polyamic acid precursor even in the case of non-thermoplastic polyimide.

On the other hand, thermoplastic polyimide has no problem of generating water and other low molecular weight substances.

However, flowability of polyimide is unsatisfactory, fibrous materials can not be fully impregnated with polyimide, and thus it has been difficult to obtain molded articles having excellent properties.

Fibrous reinforcements which are used for various resin composites are modified on the surface depending upon the kind of resin to be reinforced in order to enhance compatibility with the resin and to improve properties of the composite obtained.

For example, carbon fiber is excellent in high elasticity and light-weight properties in a variety of fibrous reinforcement is very suited for a reinforcement of super heat resistant resins such as polyimide, polyether ether ketone, polyether sulfone, polyetherimide and polyphenylene sulfide, improves mechanical strengths and other properties, and can be used as an excellent material of automotive and machinery parts.

Conventionally, it has been widely known to modify a surface of carbon fiber with epoxy resin. Epoxy resin, however, is effective as a surface modifier for a matrix of thermosetting resin such as epoxy resin whereas often has poor adhesion to a matrix of thermoplastic resin. Thus, carbon fiber modified with epoxy resin has not sufficiently improved mechanical strengths and other properties of molded articles. As a result, polyamide resin has been tried to use as a surface modifier of carbon fiber and other fibrous reinforcements for the matrix of thermoplastic resin in Japanese Laid-Open Patent SHO 53-106752.

However, in the case of using super heat-resistant thermoplastic resin as a matrix, molding is conducted at a high temperature exceeding 300°C and thus the surface modifier of polyamide resin is heat decomposed in the course of molding and leads to problems such as formation of voids and reduction of weld strength. Polyimide resin has not provided a satisfactory surface modifier. On the other hand, it has been proposed to use polyether imide resin and polyimide resin which have excellent heat resistance as surface modifiers for solving the above problem of heat decomposition in Japanese Laid-Open Patent SHO 62-299580 and 64-40569. However, problems have been found on the adhesion between these resins and the matrix of thermoplastic resin. A surface modifier and a surface-modified fibrous reinforcement which can sufficiently exhibit modification effect have not yet been found.

The present inventors have already found highly heat resistant polyimide which has structure similar to the polyimide of the invention and is soluble in organic solvents.

However, they have not yet found that such polyimide has particularly excellent properties as a surface modifier of carbon fiber and other fibrous reinforcements.

It is desirable that embodiments of the invention provide: a polyimide-based resin composition which has essentially high heat resistance and other excellent properties of polyimide resin, and additionally is excellent in resistance to absorption of water and moisture and can maintain excellent mechanical properties even under conditions of high temperature and high humidity ; a process for preparing the polyimide-based resin composition ; and a molded article obtained by using the composition.

Embodiments of the invention desirably also provide: a polyimide-based laminated composite which has the above properties and does not generate structural defects; and a process for preparing composite.

Further embodiments desirably provide a fibrous reinforcement which has a surface improved with polyimide having the above properties.

The present inventors have found that a polyimide-based resin composition, polyimide-based laminated composite and a surface-modified fibrous reinforcement which have excellent heat resistance, mechanical properties and resistance to water and moisture absorption may be prepared by using polyimide of the below formula (1) which was already found by the present inventors and had an excellent solubility in solvents ; that use of polyimide of the formula (1) in the form of a solution can provide a polyimide composite which does not generate structural defects, an efficient production of the polyimide-based resin composition and a surface modification of the fibrous reinforcement ; and that a molded article of polyimide having particularly excellent resistance to water and moisture absorption can be prepared from the polyimide based resin composition. Thus, the present invention has been completed.

That is, an aspect of the invention is :

(1) a polyimide-based resin composition comprising a polyimide having a requisite structural unit consisting of one or more recurring structural units of the formula (1) :

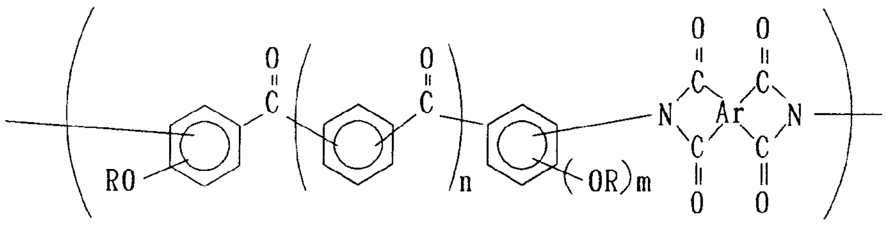

(1)

wherein m and n are individually an integer of 0 or 1, and R is

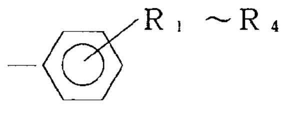

,

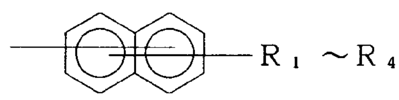

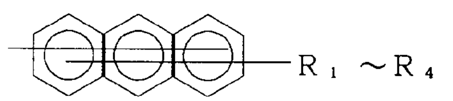

or

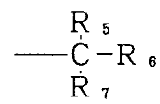

wherein $R_1$ , $R_2$ , $R_3$ and $R_4$ are individually a hydrogen atom, halogen atom, alkyl having 1~8 carbon atoms, aryl, alkenyl, aralkyl or alkoxy having 1 ~5 carbon atoms ; $R_5$ , $R_5$ and $R_7$ are individually a hydrogen atom, alkyl having 1 ~8 carbon atoms, aryl, alkenyl, aralkyl or ω-alkyloxyoligo(alkyleneoxy)alkyl having 1 ~10 carbon atoms and 1 ~3 oxygen atoms ; and Ar is a tetravalent radical having 6 ~27 carbon atoms and is a monoaromatic radical, condensed polyaromatic radical and noncondensed aromatic radical connected to each other with a direct bond or a bridge member and a fibrous reinforcement ;

(2) the polyimide-based resin composition wherein the polyimide has an inherent viscosity of 0.3 $d\ell$/g or more ;

(3) the polyimide-based resin composition comprising 0.5~65 parts by weight of a fibrous reinforcement for 100 parts by weight of the polyimide ;

(4)the composition of a polyimide having recurring structural units of the above formula (1) wherein the polymer chain end is capped with aromatic dicarboxylic anhydride and/or aromatic monoamine, that is, an end-capped polyimide obtained by conducting the preparation reaction in the presence of an aromatic dicarboxylic anhydride of the formula (4):

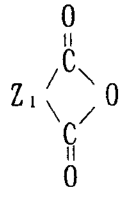

(4)

wherein $Z_1$ is a divalent radical having 6 ~15 carbon atoms and is a monoaromatic radical, condensed polyaromatic radical or noncondensed aromatic radical connected to each other with a direct bond or a bridge member, and/or aromatic monoamine represented by the formula (5) :

$$Z_2 - NH_2 \qquad (5)$$

wherein $Z_2$ is a monovalent radical having 6~15 carbon atoms and is a monoaromatic radical, condensed polyaromatic radical or noncondensed aromatic radical connected to each other with a direct bond or a bridge member ;

(5) the polyimide-based resin composition comprising the end-capped polyimide ; and

(6) a process for preparing these resin compositions.

Another aspect of the invention is a polyimide-based composite, in practice, a polyimide-based laminated composite obtained by impregnating a fibrous reinforcement with polyimide which is soluble in a solvent and

heat-fusible under impregnating conditions and has recurring structural units of the formula (1) and successively by laminating and molding the resultant prepreg.

A further aspect of the invention is a fibrous reinforcement having a surface which is modified by using polyimide, practically a solution of polyimide, having recurring structural units of the above formula (1). Preferred polyimide of the formula (1) is obtained by heat-reacting a diamine compound of the formula (6) :

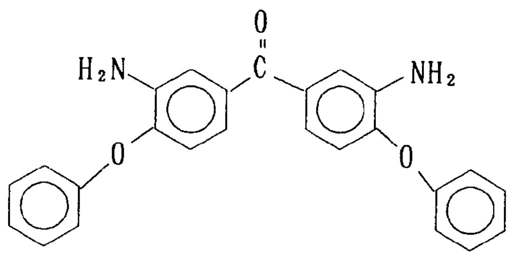

( 6 )

and/or a diamine compound of the formula (7):

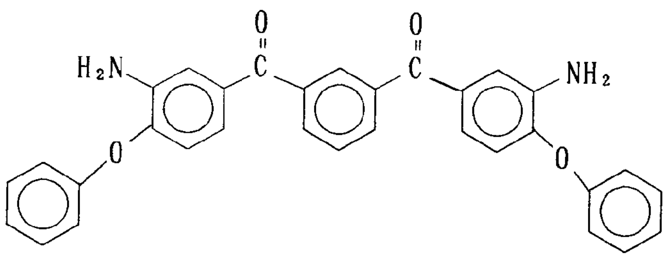

( 7 )

with one or more tetracarboxylic dianhydride selected from pyromellitic dianhydride, benzophenone tetracarboxylic dianhydride, biphenyltetracarb oxylic dianhydride, diphenylethertetracarboxylic dianhydride, naphthalenetetracarboxylic dianhydride, bis(dicarboxyphenyl)sulfone dianhydride, bis[(dicarboxyphenyl)phenyl]propane dianhydride, bis(dicarboxyphenyl)propane dianhydride, bis(dicarboxyphenyl)benzene dianhydride and bis(dicarboxyphenyl)hexafluoropropane dianhydride ; and preferred fibrous reinforcement is carbon fiber having a surface modified with a surface modifier comprising the polyimide.

A still further aspect of the invention is a polyimide-based composite and a surface-modified fibrous reinforcement wherein the polyimide is obtained by heat-reacting a diamine compound with tetracarboxylic dianhydride in the presence of dicarboxylic acid dianhydride and/or aromatic monoamine, the polyimide comprises end-capped polyimide obtained by the process.

The fiber-surface modifier comprising polyimide of the invention is practically used in the form of powder or a solution and can be marketed.

Embodiments of the invention are described below by way of example only.

Polyimide used in the invention has recurring structural units represented by the formula (1) :

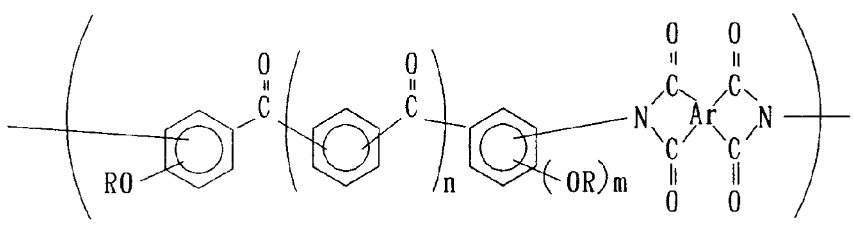

( 1 )

wherein m, n, R and Ar are the same as above, or may be a mixture of polyimide having recurring structural units of the formula (1), or a polyimide copolymer comprising one or more recurring structural units of the formula (1).

A particularly preferred copolymer of polyimide comprises structual units of the formula (2)

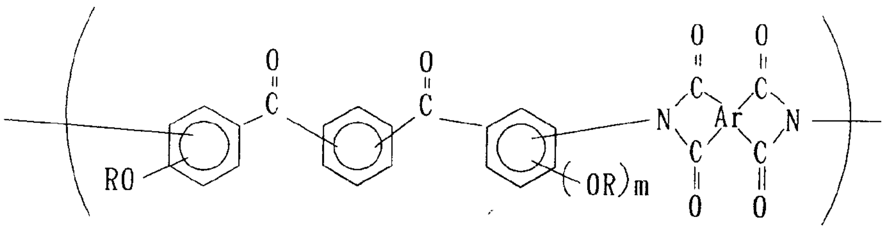

(2)

wherein m, R and Ar are the same as in the formula (1), and structural units of the formula (3) :

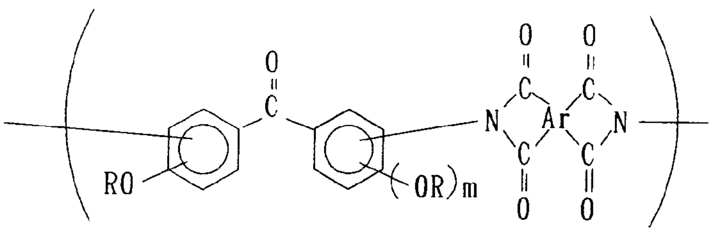

(3)

wherein m, R and Ar are the same as in the formula (1).

In the preparation process of polyimide for use in the invention, aromatic diamine represented by the formula(8) :

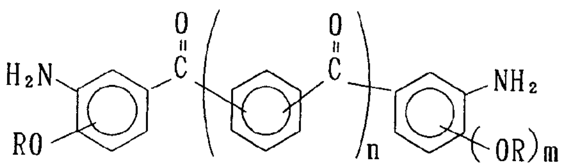

(8)

wherein m, n and R are the same as in the formula (1), for example, aromatic diamine of the formula (9) when R is phenyl :

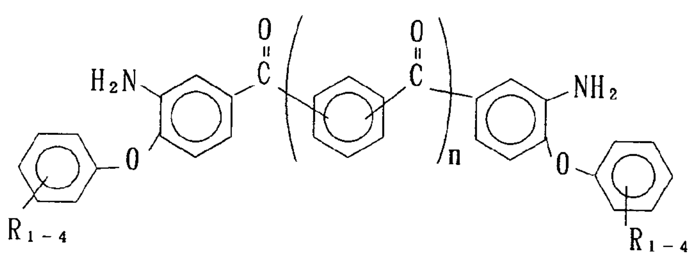

(9)

wherein n and $R_{1-4}$ are the same as in the formula (1), is polymerized with aromatic tetracarboxylic dianhydride of the formula (10) :

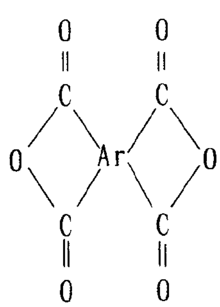

(10)

wherein Ar is a tetravalent radical having 6~27 carbon atoms and being selected from the group consisting of a monoaromatic radical, condensed polyaromatic radical and noncondensed aromatic radical connected to each other with a direct bond or a bridge member ; in practice, a monoaromatic radical of the formula (a) :

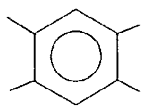

(a)

a condensed polyaromatic radical of the formula (b) :

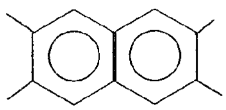

(b)

and a noncondensed aromatic radical connected to each other with a direct bond or a bridge member, that is, a radical of the formula (c) :

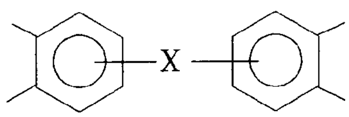

(c)

wherein X is a direct bond, -CO-, -O-, -S-, $-SO_2$, $-CH_2-$, $-C(CH_3)_2-$ or $-C(CF_3)_2-$, or the formula (d), the formula (e):

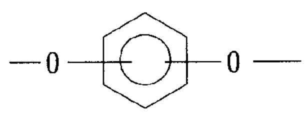

(d)

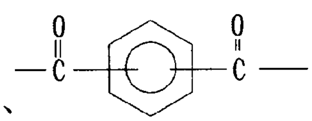

(e)

or the formula (f) :

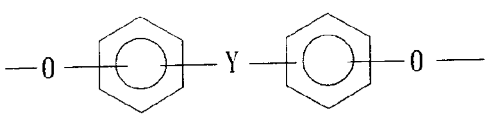

(f)

wherein Y is a direct bond, -CO-, -O-, -S-, $-SO_2$ , $-CH_2-$, $-C(CH_3)_2-$ or $-C(CF_3)_2-$.

Exemplary aromatic diamino compounds which can be used are 3,3'-diamino-4,4'-diphenoxybenzophenone, 4,4'-diamino-5,5'-diphenoxybenzophenone, 3,4'-diamino-4,5'-diphenoxybenzophenone, 3,3'-diamino-4-phenoxybenzophenone, 4,4'-diamino-5-phenoxybenzophenone, 3,4'-diamino-4-phenoxybenzophenone, 3,4'-diamino-5'-phenoxybenzophenone, 3,3'-diamino-4,4'-dibiphenoxybenzophenone, 4,4'-diamino-5,5'-dibiphenoxybenzophenone, 3,4'-diamino-4,5'-dibiphenoxybenzophenone, 3,3'-diamino-4-biphenoxybenzophenone, 4,4'-diamino-5-biphenoxybenzophenone, 3,4'-diamino-4-biphenoxybenzophenone , 3,4'-diamino-5'-biphenoxybenzophenone, 3,3'-diamino-4,4'-dimethoxybenzophenone, 4,4'-diamino-5,5'-dimethoxybenzophenone, 3,4'-diamino-4,5'-dimethoxybenzophenone, 3,3'-diamino-4-methoxybenzophenone, 4,4'-diamino-5-methoxybenzophenone, 3,4'-diamino-4-methoxybenzophenone, 3,4'-diamino-5'-methoxybenzophenone, 1,3-bis(3-amino-4-phenoxybenzoyl)benzene, 1,4-bis(3-amino-4-phenoxybenzoyl)benzene, 1,3-bis(4-amino-5-phenoxybenzoyl)benzene, 1,4-bis(4-amino-5-phenoxybenzoyl)benzene, 1,3-bis(3-amino-4-biphenoxybenzoyl)benzene, 1,4-bis(3-amino-4-biphenoxybenzoyl)benzene, 1,3-bis(4-amino-5-biphenoxybenzoyl)benzene, 1,4-bis(4-amino-5-biphenoxybenzoyl)benzene, 1,3-bis(3-amino-4-methoxybenzoyl)benzene, 1,4-bis(3-amino-5-methoxybenzoyl)benzene, 1,3-bis(4-amino-5-methoxybenzoyl)benzene and 1,4-bis(4-amino-5-methoxybenzoyl)benzene.

Polyimide of the invention is prepared by using the above aromatic diamine as a requisite raw material

monomer.
However, other aromatic diamines can also be used as a mixture in the range giving no adverse effect on the good properties of the polyimide.

When carbon fiber is used for the surface-modified fibrous reinforcement of the invention, 3,3'-diamino-4,4'diphenoxybenzophenone of the formula(6):

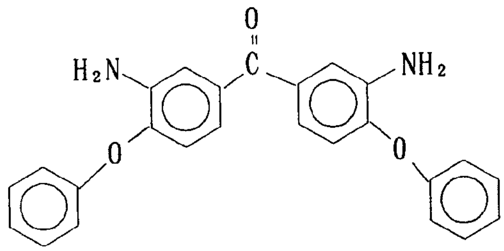

(6)

and/or 1,3-bis(3-amino-4-phenoxybenzoyl)benzene of the formula(7):

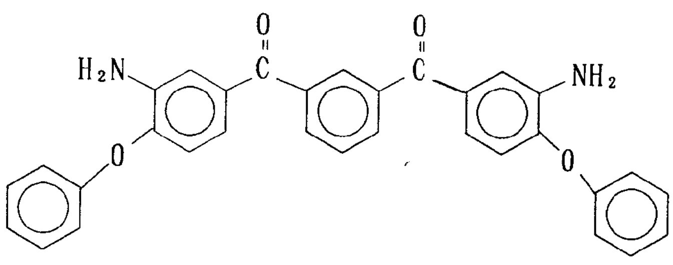

(7)

is preferably used for the modification,

No particular restriction is imposed upon the addition of one or more of other diamines as a mixture to the polymerization reaction as long as not impairing the modification and physical properties of polyimide.

Other diamines which can be used as a mixture include, for example, m-phenylenediamine, o-phenylenediamine, p-phenylenediamine, m-aminobenzylamine, p-aminobenzylamine, 4,4'-diaminodiphenyl ether, 3,3'-diaminodiphenyl ether, 3,4'-diaminodiphenyl ether, bis(3-aminophenyl)sulfide, bis(4-aminophenyl)sulfide, (3-aminophenyl)(4-aminophenyl)sulfide, bis(3-aminophenyl)sulfoxide, bis(4-aminophenyl)sulfoxide, (3-aminophenyl)(4-aminophenyl)sulfoxide, bis(3-aminophenyl)sulfone, bis(4-aminophenyl)sulfone, (3-aminophenyl)(4-aminophenyl)sulfone, 3,3'-diaminobenzophenone, 3,4'-diaminobenzophenone, 4,4'-diaminobenzophenone, 3,3'-diaminodiphenylmethane, 3,4'-diaminodiphenylmethane, 4,4'-diaminodiphenylmethane, bis[4-(3-aminophenoxy)phenyl]methane, bis[4-(4-aminophenoxy)phenyl]methane, 1,1-bis[4-(3-aminophenoxy)phenyl]ethane, 1,1-bis[4-(4-aminophenoxy)phenyl]ethane, 1,2-bis[4-(3-aminophenoxy)phenyl]ethane, 1,2-bis[4-(4-aminophenoxy)phenyl]ethane, 2,2-bis[4-(3-aminophenoxy)phenyl]propane, 2,2-bis[4-(4-aminophenoxy) phenyl]propane, 2,2-bis[4-(3-aminophenoxy)phenyl]butane, 2,2-bis[3-(3-aminophenoxy)phenyl]-1,1,1,3,3,3-hexafluoropropane, 2,2-bis[4-(4-aminophenoxy)phenyl]-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-amino-α,α-dimethybenzyl)benzene, 1,3-bis(4-amino-α,α-dimethybenzyl)benzene, 1,4-bis(3-amino-α,α-dimethybenzyl)benzene, 1,4-bis(4-amino-α,α-dimethybenzyl)benzene, 4,4'-bis(3-aminophenoxy)biphenyl, 4,4'-bis(4-aminophenoxy)biphenyl, bis[4-(3-aminophenoxy)phenyl]ketone, bis[4-(4-aminophenoxy)phenyl]ketone, bis[4-(3-aminophenoxy)phenyl]sulfide bis[4-(4-aminophenoxy)phenyl]sulfide bis[4-(3-aminophenoxy)phenyl]sulfoxide, bis[4-(4-aminophenoxy)phenyl]sulfoxide, bis[4-(3-aminophenoxy) phenyl]sulfone, bis[4-(4-aminophenoxy)phenyl]sulfone, bis[4-(3-aminophenoxy)phenyl]ether, bis[4-(4-aminophenoxy)phenyl]ether, 1,4-bis[4-(3-aminophenoxy)benzoyl]benzene, 1,3-bis[4-(3-aminophenoxy)benzoyl] benzene, 4,4'-bis[3-(4-aminophenoxy)benzoyl]diphenyl ether, 4,4'-bis[3-(3-aminophenoxy)benzoyl]diphenyl ether, 4,4'-bis[4-(4-amino-α,α-dimethybenzyl)phenoxy]benzophenone, 4,4'-bis[4-(4-amino-α,α-dimethybenzyl)phenoxy]diphenyl sulfone, bis[4- {4-(4-aminophenoxy) phenoxy} phenyl]sulfone, 1,4-bis[4-(4-aminophenoxy)-α,α-dimethybenzyl]benzene, 1,4-bis[4-(3-aminophenoxy)-α,α-dimethybenzyl]benzene, 1,3-bis[4-(4-aminophenoxy)-α,α-dimethybenzyl]benzene, 1,3-bis[4-(3-aminophenoxy)-α,α-dimethybenzyl]benzene, 3,3'-diamino-4,4'-difluorobenzophenone, 3,3'-diamino-5,5'-bis(trifluoromethyl)diphenyl ether, 4,4'-diamino-5,5'-bis (trifluoromethyl)diphenyl ether, 1,3-bis [4-(4-amino-6-trifluoromethylphenoxy)-α,α-dimethylbenzyl ] benzene, 1,3-bis [4-(4-amino-6-fluoromethylphenoxy)-α,α-dimethylbenzyl] benzene, 1,3-bis [4-(4-amino-6-methylphenoxy)-α,α-dimethylbenzyl] benzene, 1,3-bis [4-(4-amino-6-cyanophenoxy)-α,α-dimethylbenzyl] benzene, 2,6-bis [4-(4-amino-α,α-dimethylbenzyl)phenoxy] benzonitrile, 2,6-bis [4-(4-amino-α,α-bistrifluoromethylbenzyl)phenoxy] benzonitrile, 2,6-bis [4-(4-aminophenoxy)phenoxy] benzonitrile and 2,6-bis [4-(4-aminobenzoyl)phenoxy] benzonitrile. These aromatic diamines can be used singly or as a mixture.

Exemplary tetracarboxylic dianhydride of the formula (8) which can be used in the invention include, pyromellitic dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride, 2,2',3,3'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl)ether dianhydride, bis(3,4-dicarboxyphenyl)sulfone dianhydride, 1,1-bis(2,3-dicarboxyphenyl)ethane dianhydride, bis(2,3-dicarboxyphenyl)methane dianhydride, bis(3,4-dicarboxyphenyl)methane dianhydride, 2,2-bis(3,4-dicarboxyphenyl)-1,1,1,3,3,3-hexafluoropropane dianhydride, 2,2-bis(2,3-dicarboxyphenyl)-1,1,1,3,3,3-hexafluoropropane dianhydride, 1,3-bis[(3,4-dicarboxy)benzoyl]benzene dianhydride, 1,4-bis[(3,4-dicarboxy)benzoyl]benzene dianhydride, 2,2-bis[4 {4-(1,2-dicarboxy)benzoyl} phenyl]propane dianhydride, 2,2-bis[4 {3-(1,2-dicarboxy)phenoxy} phenyl]propane dianhydride, bis[4- {4-(1,2-dicarboxy)phenoxy} phenyl]ketone dianhydride, bis[4- {3-(1,2-dicarboxy)phenoxy} phenyl]ketone dianhydride, 4,4'-bis[4-(1,2-dicarboxy)phenoxy]biphenyl dianhydride, 4,4'-bis[3-(1,2-dicarboxy)phenoxy]biphenyl dianhydride, bis[4- {4-(1,2-dicarboxy)phenoxy} phenyl]sulfone dianhydride, bis[4- {3-(1,2-dicarboxy)phenoxy} phenyl]sulfone dianhydride, bis[4- {4-(1,2-dicarboxy)phenoxy} phenyl]sulfide dianhydride, bis[4- {3-(1,2-dicarboxy)phenoxy} phenyl]sulfide dianhydride, 2,2-bis[4- {4-(1,2-dicarboxy)phenoxy} phenyl]-1,1,1,3,3,3-hexafluoropropane dianhydride, 2,2-bis[4-(3-(1,2-dicarboxy)phenoxy } phenyl]-1,1,1,3,3,3-hexafluoropropane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 1,2,3,4-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride.

These dianhydrides can be used singly or as a mixture.

In the surface modification of the fibrous reinforcement in the invention, polyimide particularly used for the surface modification of carbon fiber is prepared by using 3,3'-diamino-4,4'-diphenoxybenzopheno ne and/or 1,3-bis(3-amino-4-phenoxybenzoyl)benzene as a diamine component. In such a case, tetracarboxylic dianhydrides which are preferably used are pyromellitic dianhydride, benzophenonetetracarboxyl ic dianhydride, biphenyltetracarboxylic dianhydride, diphenylethertetrac arboxylic dianhydride, naphthalenetetracarboxylic dianhydride, bis(dicarboxyphenyl)sulfone dianhydride, bis(dicarboxyphenyl)propane dianhydride, bis[(dicarboxyphenoxy)phenyl]propane dianhydride, bis(dicarboxyphenyl)benzene dianhydride and/or bis(dicarboxyphenyl) hexafluoropropane dianhydride. In these dianhydrides, benzophenonetetra carboxylic dianhydride and biphenyltetracarboxylic dianhydride are particularly preferred. These tetracarboxylic dianhydrides can be used singly or as a mixture.

Other tetracarboxylic dianhydrides can be used as a mixture in the range giving no adverse effect upon properties of the surface modifier for carbon fiber.

Polyimide obtained by using these aromatic diamine and tetracarboxylic dianhydride as monomer components is a homopolymer, copolymer or mixture of polyimide having recurring structural units primarily represented by the formula (1), (2) or (3). These polymers also include polyimide having at the polymer chain end a radical which is essentially unsubstituted or substituted with a radical having no reactivity with amine and/or dicarboxylic anhydride.

The polyimide having at the polymer chain end an aromatic ring which is unsubstituted or substituted with a radical having no reactivity with amine and/or dicarboxylic anhydride can be obtained by reacting aromatic diamine of the above formula (8) and/or (9) with tetracarboxylic dianhydride primarily represented by the above formula (10) in the presence of aromatic dicarboxylic anhydride of the above formula (4) and/or aromatic monoamine of the above formula (5), and thermally or chemically imidizing the resulting polyamic acid.

Dicarboxylic anhydride of the formula (4) and monoamine of the formula (5) used in the invention are conventionally known compounds.

Exemplary dicarboxylic anhydrides which can be used in the invention include phthalic anhydride,2,3-benzophenonedicarboxylic anhydride, 3,4-benzophenonedicarboxylic anhydride, 2,3-dicarboxyphenyl phenyl ether anhydride, 3,4-dicarboxyphenyl phenyl ether anhydride, 2,3-biphenyldicarboxylic anhydride, 3,4-biphenyldicarboxylic anhydride, 2,3-dicarboxyphenyl phenyl sulfone anhydride, 3,4-dicarboxyphenyl phenyl sulfone anhydride, 2,3-dicarboxyphenyl phenyl sulfide anhydride, 3,4-dicarboxyphenyl phenyl sulfide anhydride, 1,2-naphthalenedicarboxylic anhydride, 2,3-naphthalenedicarboxylic anhydride, 1,8-naphthalenedicarboxylic anhydride, 1,2-anthracenedicarboxylic anhydride, 2,3-anthracenedicarboxylic anhydride, and 1,9-anthracenedicarboxylic anhydride.

These dicarboxylic anhydrides can be substituted with a radical having no reactivity for amine and dicarboxylic anhydride.

In these dicarboxylic anhydrides, phthalic anhydride is most preferred in view of performance and practical usage of resulting polyimide. In the case of using phthalic anhydride, no particular restriction is imposed upon the partial substitution of phthalic anhydride with other dicarboxylic anhydrides in the range giving no adverse effect on the good properties of polyimide.

Amount of dicarboxylic anhydride used is 0.001~1.0 mole, preferably 0.01 ~0.5 mole per mole of aromatic diamine used.

When aromatic monoamines are used, aromatic monoamines include, for example, aniline, o-toluidine, m-toluidine, p-toluidine, 2,3-xylidine, 2,6-xylidine, 3,4-xylidine, 3,5-xylidine, o-chloroaniline, m-chloroaniline, p-chloroaniline, o-bromoaniline, m-bromoaniline, p-bromoaniline, o-nitroaniline, m-nitroaniline, p-nitroaniline, o-aminophenol, m-aminophenol, p-aminophenol, o-anisidine, m-anisidine, p-anisidine, o-phenetidine, m-phenetidine, p-phenetidine, o-aminobenzaldehyde, m-aminobenzaldehyde, p-aminobenzaldehyde, o-aminobenzonitrile, m-aminobenzonitrile, p-aminobenzonitrile, 2-aminobiphenyl, 3-aminobiphenyl; 4-aminobiphenyl, 2-aminophenyl phenyl ether, 3-aminophenyl phenyl ether, 4-aminophenyl phenyl ether, 2-aminobenzophenone, 3-aminobenzophenone, 4-aminobenzophenone, 2-aminophenyl phenyl sulfide, 3-aminophenyl phenyl sulfide, 4-aminophenyl phenyl sulfide, 2-aminophenyl phenyl sulfone, 3-aminophenyl phenyl sulfone, 4-aminophenyl phenyl sulfone, α-naphthylamine, β-naphthylamine, 1-amino-2-naphthol, 2-amino-1-naphthol, 4-amino-1-naphthol, 5-amino-1-naphthol, 5-amino-2-naphthol, 7-amino-2-naphthol, 8-amino-1-naphthol, 8-amino-2-naphthol, 1-aminoanthracene, 2-aminoanthracene and 9-aminoanthracene.

These aromatic monoamines can be substituted with a radical having no reactivity for amine and dicarboxylic anhydride.

Amount of aromatic monoamine used in 0.001~1.0 mole, preferably 0.01 ~0.5 mol per mole of aromatic tetracarboxylic dianhydride used.

Any known processes for preparing polyimide can be applied to polyimide of the invention. Process for carrying out the reaction in an organic solvent are preferred in particular. N,N-Dimethylacetamide is preferably used as a solvent reaction. Other solvents which can be used include, for example, N,N-dimethylformamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethane, bis(2-methoxyethyl)ether, 1,2-bis(2-methoxyethoxy)ethane, bis[2-(2-methoxyethoxy)ethyl]ether, tetrahydrofuran, 1,3-dioxane, 1,4-dioxane, pyridine, picoline, dimethyl sulfoxide, dimethyl sulfone, tetramethylurea, hexamethylphosphoramide, phenol, o-cresol, m-cresol, p-cresol, m-cresylic acid, p-chlorophenol, anisole, benzene, toluene and xylenes. These organic solvents can be used singly or as a mixture.

Amide-based solvents are particularly preferred in view of stability of the solvent, workability and usage.

The processes for adding aromatic diamine, aromatic tetra carboxylic dianhydride and aromatic dicarboxylic anhydride and/or aromatic monoamine to the organic solvent and progressing the reaction of the invention include :

(A) After reacting aromatic tetracarboxylic dianhydride with aromatic diamine, aromatic dicarboxylic anhydride or aromatic monoamine is added to continue the reaction.

(B) After reacting aromatic diamine with aromatic dicarboxylic anhydride, aromatic tetracarboxylic dianhydride is added to continue the reaction.

(C) After reacting aromatic tetracarboxylic dianhydride with aromatic monoamine, aromatic diamine is added to continue the reaction.

(D) Aromatic tetracarboxlic dianhydride, aromatic diamine and aromatic dicarboxylic anhydride or aromatic monoamine are added at one time and the reaction is carried out.

Any of the above addition procedures can be conducted.

Reaction temperature is usually 250 °C or less, preferably 50 °C or less. No particular limitation is placed upon the reaction pressure and the reaction can be satisfactorily carried out under atmospheric pressure. Reaction time differs depending upon kind of aromatic tetracarboxylic dianhydride, kind of the solvent and reaction temperature and the time of 4~24 hours is usually sufficient.

Polyamic acid thus obtained is further imidized by heating at 100 ~ 400 °C or chemically imidized by using acetic anhydride or other imidizing agents to give polyimide having recurring structural units corresponding to polyamic acid.

Desired polyimide can also be obtained by suspending or dissolving aromatic diamine and aromatic tetracarboxylic dianhydride in the solvent and further adding aromatic dicarboxylic anhydride or aromatic monoamine in the case of terminating the polyimide chain with an aromatic ring and heating the resulting mixture to simultaneously progress formation and imidization of polyamic acid, precursor of polyimide.

Polyimide used in the invention can be obtained by the above processes (Polyimide homopolymer, polyimide copolymer and a mixture of polyimide which are obtained by the above processes and have recurring structural units of the formula (1), (2) or (3) or polyimide terminated at the polymer chain end with a radical which is unsubstituted or substituted with a radical having no reactivity with amine or dicarboxylic anhydride will hereinafter be referred to simply as "polyimide of the invention").

Polyimide of the invention controls its molecular weight by adjusting the molar ratio of monomer components as in the case of usual polycondensation of polymers to obtain polyimide which exhibits the effect of the invention. The mole ratio of monomer components in the invention is 0.8~ 1.2 moles of the diamine compound for 1 mole of the total amount of tetracarboxylic dianhydride. When the molar ratio is less than 0.8 or exceeds 1.2, polyimide obtained has a low molecular weight and is unfavorable for surface modification of fibrous reinforcement in particular.

The molar ratio is preferably 0.9 ~1.1 moles, more preferably 0.95 ~1.05 moles of the diamine compound for 1 mole of tetracarboxylic dianhydride.

Inherent viscosity of polyimide of the invention is measured at 35°C after heat-dissolving polyimide in a solvent mixture composed of 9 parts by weight of p-chlorophenol and 1 part by weight of phenol at a concentration of 0.5 g/*dℓ* .

Polyimide of the invention has an inherent viscosity of preferably 0.30 *dℓ*/g or more, more preferably 0.40 *dℓ*/g or more. When the inherent viscosity is less than 0.30 *dℓ*/g, mechanical strengths of polyimide itself are insufficient and properties of resin composition is also unsatisfactory even though such polyimide is used for the composition of the invention.

The polyimide-based resin composition of the invention comprises polyimide resin of the invention and 5 ~65 parts by weight, preferably 10 ~50 parts by weight of fibrous reinforcement for 100 parts by weight of the resin.

When the amount of fibrous reinforcement is less than 5 parts by weight, reinforcing effect is unsatisfactory. On the other hand, when the amount of reinforcement exceeds 65 parts by weight, it becomes difficult to obtain good molded articles by melt processing such as injection molding.

The polyimide-based resin composition of the invention can be prepared by various known processes for blending fibrous reinforcement with resin. For example, polyimide resin powder is premixed with fibrous reinforcement by using a mortar, Henschel mixer, drum blender, tumbling mixer, ball mill or ribbon blender and thereafter melt-kneaded with a melt-mixture or hot rolls to obtained pellets or a powdery mixture.

However, most preferred is the process of the invention for utilizing the solubility which is a characteristic of polyimide of the invention. That is the resin composition can be prepared by way of a preblended state which utilizes solubility of polyimide of the invention. The process is carried out as follows.

A prescribed amount of polyimide of the invention is dissolved in an organic solvent such as a halogenated hydrocarbon solvent, amide solvent or phenol solvent. A prescribed amount of fibrous reinforcement is added to the solution and dispersed with stirring. The resulting dispersion of the fibrous reinforcement in an organic solvent solution of polyimide is successively poured into a lean solvent with vigorous stirring to separate polyimide from the solution.

The precipitate was filtered and the solution is removed from the precipitate to obtain a uniform mixture of polyimide and fibrous reinforcement. Polyimide powder thus obtained is in a premixed state comprising uniformly dispersed fibrous reinforcement and can be converted to a polyimide resin composition such as pellets and a powdery mixture by using a melt mixer or hot rolls.

Solvents used for the process include, for example, dichloromethane, chloroform, 1,2-dichloroethane, 1,1,2-trichloroethane, dibromomethane, tribromomethane, 1,2-dibromoethane, 1,1,2-tribromoethane, N,N-dimethylformamide, N,N-dimethylacetamide, N,N-dimethoxylacetamide, N-methyl-2-pyrrolidone, 1,3-dimethyl-2-imidazolidinone, N-methylcaprolactam, phenol, cresol, xylenols, halogenated phenol, halogenated cresol, dimethylsulfoxide and dimethyl sulphone.

In the process, concentration of the polyimide solution is 5~50 % by weight, preferably 15 ~40 % by weight in view of viscosity in working. Exemplary lean solvents for separation polyimide include methanol, ethanol, propanol, acetone, methyl ethyl ketone, methyl isobutyl ketone, benzene, toluene and xylene. The amount of solvent used is 5~30 times, preferably 10 ~20 times the total amount of the composition.

The polyimide resin composition of the invention of the invention thus obtained can be processed by various molding methods.

The polyimide based resin composition of the invention can provide various form of articles by changing mold of injection molding.

Articles having excellent properties can be obtained by injection molding in particular.

Particularly, the polyimide based resin composition is excepted to employ as parts for automobile, for example, valve-lifter, impeller and the like, which is strongly desired dynamic repeated fatigue.

In the case of melt-processing the polyimide-based resin composition, other thermoplastic resins can be

blended in a suitable amount depending upon the object for use as long as giving no adverse effect on the good properties of the polyimides.

Thermoplastic resins which can be blended include, for example, polyethylene, polypropylene, polycarbonate, polyarylate, polyamide, polysulfone, polyether sulfone, polyether ketone, polyphenylene sulfide, polyamideimide, polyetherimide, modified polyphenylene oxide and other kinds of polyimides.

Fillers which are used for common resin compositions can be added in the range not impairing the object of the invention. Exemplary fillers include graphite, carborundum, silica powder, molybdenum disulfide, fluoro resin and other wear resistance improvers; antimony trioxide, magnesium carbonate, calcium carbonate and other flame retardance improvers; clay, mica and other electrical property improvers; asbestos, silica, graphite and other tracking resistance improvers; barium sulfide, silica, calcium metasilicate and other acid resistance improvers; iron powder, zinc powder, aluminum powder, copper powder and other thermal conductivity improvers; and other miscellaneous materials such as glass beads, glass balloons, talc, diatomaceous earth, alumina, silicate balloons, hydrated alumina, metal oxides and colorants.

The polyimide-based composite of the invention, laminated composite in particular, comprises a substrate composed of fibrous reinforcement and polyimide of the invention.

The polyimide composite of the invention can be obtained by impregnating fibrous reinforcement, that is, a substrate composed of fibrous reinforcement with a solution of polyimide of the invention in an organic solvent, removing the solvent from the impregnated substrate, heating the substrate above the melt-flow temperature of the above polyimide and applying pressure in a mold.

The fibrous reinforcement impregnated with polyimide of the invention can be used in the form of a single layer or a multi-layer which is obtained by superimposing two or more layers of the substrate.

Exemplary organic solvents used for dissolving polyimide include general purpose solvents such as halogenated hydrocarbon solvents, amide solvents and phenol solvents ; practically, those used for the preparation of polyimide resin composition of the invention. In these solvents, N,N-dimethylformamide and N,N-dimethylacetamide are particularly preferred in view of properties and practical usage. These solvents can be used singly or as a mixture.

No particular limitation is put upon the concentration of the polyimide solution as long as the concentration is within the range of solubility of polyimide. The concentration is preferably 1~50 % by weight in terms of workability on coating and impregnation of fibrous reinforcement.

The polyimide solution has viscosity of usually 10~100,000 cps, preferably 500 ~50,000 cps in view of workability.

No particular limitation is placed on the dissolving temperature and atmospheric pressure is satisfactory.

Any fibrous reinforcements used for the substrate of a laminated panel can be applied to the fibrous reinforcement of the invention. Exemplary fibrous reinforcement include, for example, glass fiber, carbon fiber, aromatic polyamide fiber, silicon carbide fiber boron fiber, textiles and nonwoven fabrics of these fibers and paper.

Impregnation of the fibrous reinforcement with the polyimide solution can be conducted by any process which can uniformly build up a desired amount of polyimide on the substrate by treating the fibrous substrate with the polyimide solution. It is often employed a process for impregnating the substrate with the polyimide solution or coating the polyimide solution on the substrate.

The build-up of polyimide on the fibrous reinforcement is 5 ~50 % by weight, preferably 10~30 % by weight for the amount of fibrous reinforcement.

Coating of the polyimide solution on fibrous reinforcement can be carried out by any process. For example, a bar coater and doctor blade can be used.

In the process of the invention, the polyimide solution is built up on the substrate by coating or impregnation.

However, coating and impregnation are regarded as substantially the same, and "impregnation" in the invention means "coating or impregnation".

Successively, the solvent is removed from the fibrous reinforcement impregnated with the polyimide solution in a nitrogen or air stream at the temperature above the boiling point of the solvent used.

One or more sheets of the fibrous reinforcement thus impregnated with the polyimide solution (prepreg sheet) are super-imposed, heated above the melt-flow temperature of polyimide, and compression molded to obtain a polyimide composite.

Molding temperature and pressure are individually 250~450 °C and 1 ~1000 $kg/cm^2$, preferably, 300~400 °C and 10~500 $kg/cm^2$

In the preparation of polyimide composite of the invention, other resins can be formulated in the range without impairment of solubility, melt-flowability and adhesion of polyimide used in the invention. Other resins include, for example, various thermoplastic resin which can be formulated in the above composition of the invention and thermosetting resin such as phenolic resin and bismaleimide resin.

Further, various fillers which can be used for the above polyimide resin composition of the invention can be formulated in the range giving no adverse effect on the object of the invention.

In the fibrous reinforcement of the invention which has a surface modified with polyimide of the invention, the above polyimide used in the invention can effectively treat the surface of fibrous reinforcement, and additionally, the surface-modified fibrous reinforcement thus obtained has an excellent applicability to a fibrous reinforcement of resins, polyimide resin in particular.

Consequently, polyimide of the invention can be applied to surface modification of fibrous reinforcement in the form of polyimide powder or an organic solvent solution of the powder. Polyimide of the invention can also be applied in the state of polyamide acid, precursor of polyimide, or as a mixture of polyamic acid and polyimide and imidized to obtain a surface-modifies fibrous reinforcement.

The surface-modified fibrous reinforcement of the invention is obtained by building up an organic solvent solution of polyimide of the invention on the surface of fibrous reinforcement and removing the solvent.

Preferred polyimide is prepared by heating 3,3'-diamino-4,4'-diphenoxybenzophenone and/or 1,3-bis(3-amino-4-phenoxybenzoyl)benzene at 100 ~250 °C in an organic solvent with one or more tetracarboxylic dianhydride selected from pyromellitic dianhydride, benzophenonetetracar boxylic dianhydride, biphenyltetracarboxylic dianhydride, diphenylethertetracarboxylic dianhydride, naphthalenetetracarboxylic dianhydride, bis(dicarboxyphenyl)sulfone dianhydride, bis[(dicarboxyphe nyl)phenyl]propane dianhydride, bis(dicarboxyphenyl)propane dianhydride, bis(dicarboxyphenoxy)benzene dianhydride and bis(dicarboxyphenyl) hexafluoropropane dianhydride.

Fibrous reinforcements which can be used in the invention include glass fiber, carbon fiber, aromatic polyamide fiber, silicone carbide fiber and boron fiber. Carbon fibers which can be more preferably used include acrylic based, rayon-based, lignin-based and pitch-based carbon fibers.

No particular restriction is imposed upon the morphology of fibrous reinforcement and chopped strand, tow (roving) or textile can be used.

The surface-modified fibrous reinforcement of the invention can be obtained by the following processes.

(1) A process for dissolving polyimide of the invention and its precursor in an organic solvent, building up the resulting modifier solution on the surface of fibrous reinforcement and carrying out heat imidization and solvent removal to obtain surface-modified reinforcement.

(2) A process for building up polyamic acid precursor of polyimide of the invention on the surface of fibrous reinforcement and carrying out heat-imidization on the surface of fibrous reinforcement to achieve surface modification.

(3) A process for dissolving polyimide of the invention in an organic solvent, building up the resultant modifier solution on the surface of fibrous reinforcement and removing the solvent to modify the surface.

(4) A process for heat-melting polyimide of the invention on the surface of fibrous reinforcement to coat the surface to be modified.

In these processes, processes (1) and (3) are most common and useful.

The build-up of polyimide of the invention as a surface modifier of fibrous reinforcement is preferably 0.5 ~ 10 parts by weight, more preferably 2~5 parts by weight for 100 parts by weight of fibrous reinforcement. When the build up is less than 0.5 part by weight, satisfactory effect cannot be obtained. On the other hand, further improvement of properties cannot be obtained even though the build-up exceeds 10 parts by weight.

In the surface modification of fibrous reinforcement with polyimide of the invention, previous application of other surface treatment on the fibrous reinforcement is preferred because adhesion between polyimide of the invention and fibrous reinforcement is enhanced. No particular restriction is put upon the method of other surface treatment. Any common method for treating the surface of fibrous reinforcement can be applied. Representative methods for the surface treatment include, for example, liquid phase oxidation such as chemical oxidation by nitric acid or permanganate/sulfuric acid and electrolytic oxidation ; and gas phase oxidation such as heating in air, oxygen, ozone and other gaseous phases, plasma treatment and corona discharge.

The surface of fibrous reinforcement already treated with polyimide of the invention can be further heat treated.

The heat-treating temperature is usually 300~500 °C, preferably 300 ~450 °C. When the temperature is less than 300°C, the effect of heat treatment cannot be obtained. On the other hand, the temperature exceeding 500°C is also unfavorable because the surface modifier is liable to decompose by heat. Heating time is usually 0.1~30 hours.

The thus-obtained carbon fiber roving having a surface modified with polyimide resin is cut into a chopped strand having a length of 1~150 mm, dry blended with a desired heat-resistance thermoplastic resin, for example, polyimide resin, polyether ether ketone and polyether sulfone, successively melt-kneaded and extruded with an extruder, and cut into pellets having a prescribed length.

The pellets thus obtained can be processed by commonly known methods such as compression molding, injection molding and extrusion forming to obtain desired articles.

Further, carbon fiber surface-modified by the above process can also be collected to one direction and successively impregnated with a heat-resistant thermoplastic resin by a common method to obtain prepreg. Such prepreg can be prepared by melt-impregnation process disclosed, for example, in Japanese Laid-Open Patent HEI 1-121363. Prepreg thus obtained can also be cut into a certain length, laminated so as to orientate the fiber to a prescribed direction and successively hot-pressed to obtain an article.

The surface-modified fibrous reinforcement of the invention has no particular restriction upon thermoplastic resin and can be applied to any known thermoplastic resins.

Exemplary known thermoplastic resins include polycarbonate resin, polyamide resin, polyethylene terephthalate, polybutylene terephthalate, polyphenylene sulfide, polyetherimide, thermoplastic imide resin, polyether sulfone, polyether ether ketone and polyether ketone.

The present invention will hereinafter be illustrated in detail by way of synthetic examples, examples and comparative examples.
Properties of polyimide were measured by the following methods.

· Tg, Tc, Tm :
Measured by DSC (Shimadzu DE-40 series, DSC-41M)

· 5 % Weight loss temperature :
Measured in air by DTG (Shimadzu DT-40 series, DTG-40M)

· Inherent viscosity ($\eta$ inh) :
Polyimide powder was dissolved in a solvent mixture of p-chlorophenol/phenol in the ratio of 9/1 by weight into a concentration of 0.5 g/100 $m\ell$ and measured at 35 °C.

· Tensile test of injection molded specimens :
Measured in accordance with ASTM D-3039
Measuring conditions :

| | |
|---|---|
| RT · DRY | room temperature (18 ~25°C)<br>moisture absorption 0.2 % or less |
| HOT · WET | high temperature (177 °C and 204°C)<br>moisture absorption 0.6 ± 0.1% |

· Water absorption :
Measured in accordance with JIS K-7209

· Viscosity :
Measured at room temperature with a viscometer Model E (Manufactured by Toki Sangyo Co.)

· Melt initiation temperature :
Measured with a Shimadzu Type Flowtester (CFT 500A) under 100 kg load, at a temperature rise rate of 5.0 °C/min

· Melt viscosity :
Measured with a Shimadzu Koka Type Flowtester (CFT 500A) under 100 kg load

· Adhesion test (tensile shear adhesive strength)
Polyimide powder was suspended in ethanol to form paste.
The paste was coated on two cold rolled steel panels (JIS G-3141 SPCC. SD. Size 1.6 × 25 × 100 mm). Two panels were adhered by pressing at 350 °C under 300 psi.
Tensile shear strength of adhered specimens was measured in accordance with JIS K-6848.

· Flexural strength and Flexural modulus :
Measured in accordance with ASTM D-790 at 25°C and 200°C

Synthetic Example 1

To a reaction vessel equipped with a stirrer, reflux condenser and a nitrogen inlet tube, 396.5 g (1.0 mol)of 3,3'-diamino-4,4'-diphenoxybenzophenone, 315.8 g (0.98 mol) of 3,3',4,4'-benzophenone-tetracarboxylic dianhydride, 5.92 g(0.04 mol) of phthalic anhydride, 14.0 g of $\gamma$-picoline and 2849.2 g of m-cresol were charged and heated to 150 °C with stirring in a nitrogen atmosphere. Thereafter the mixture was reacted at 150 °C for 4 hours while distilling out about 30 $m\ell$ of water.

After finishing the reaction, the reaction mixture was cooled to the room temperature, poured into about 20 liters of methyl ethyl ketone. The precipitated polyimide powder was filtered, washed with methyl ethyl ketone and dried in the air at 50 °C for 24 hours and in a nitrogen atmosphere at 230 °C for 4 hours, Polyimide powder obtained was 670 g (98.2 % yield). Polyimide powder thus obtained had an inherent viscosity of 0.56 $d\ell$/g, a glass transition temperature of 246 °C and a 5 % weight loss temperature of 524 °C.

Synthetic Examples 2~12

Polyimide powder was prepared by carrying out the same procedures as described in Synthetic Example 1 except that aromatic diamine and aromatic tetracarboxylic dianhydride were used as illustrated in Table 1.

Table 1 illustrates aromatic diamine, tetracarboxylic dianhydride, yield, inherent viscosity, glass transition temperature and 5 % weight loss temperature.

Synthetic Example 13

Polyimide powder was prepared by carrying out the same procedures as Synthetic Example 1 without using phthalic anhydride.

Yield was 96.6 %. Table 1 illustrates yield, inherent viscosity, glass transition temperature and 5 % weight loss temperature.

Table 1

| Synth. Examp. | Diamine | Acid dian-hydride | Yield (%) | η inh (dl/g) | T g (℃) | $Td_{5.0}$ (℃) |
|---|---|---|---|---|---|---|
| 1 | 3,3'-DABP-DPO *1 | BTDA *1 | 98.2 | 0.56 | 246 | 524 |
| 2 | 3,3'-DABP-MPO *2 | BTDA | 97.4 | 0.59 | 248 | 533 |
| 3 | 3,4'-DABP-MPO *3 | BTDA | 98.0 | 0.58 | 263 | 529 |
| 4 | 3,3'-DABP-DBO *4 | BTDA | 95.6 | 0.48 | 243 | 525 |
| 5 | 3,3'-DABP-MBO *5 | BTDA | 98.3 | 0.56 | 248 | 535 |
| 6 | 3,4'-DABP-MPO *6 | BTDA | 97.7 | 0.55 | 258 | 530 |
| 7 | m,m-ABB-DPO *7 | PMDA *12 | 95.5 | 0.66 | 256 | 527 |
| 8 | m,m-ABB-DPO | BTDA | 95.5 | 0.75 | 233 | 522 |
| 9 | m,m-ABB-DBO *8 | PMDA | 96.2 | 0.71 | 248 | 527 |
| 10 | m,m-ABB-DBO | BTDA | 97.3 | 0.73 | 237 | 523 |
| 11 | 3,3'-DABP *9 | BTDA | 97.5 | 0.56 | 245 | 554 |
| 12 | m,m-ABB *10 | BTDA | 96.1 | 0.49 | 219 | 551 |
| 13 | 3,3'-DABP-DPO | BTDA | 96.6 | 0.61 | 252 | 520 |

Note :
* 1. 3,3'-diamino-4,4'-diphenoxybenzophenone
* 2. 3,3'-diamino-4-phenoxybenzophenone
* 3. 3,4'-diamino-4-phenoxybenzophenone
* 4. 3,3'-diamino-4,4'-dibiphenoxybenzophenone
* 5. 3,3'-diamino-4-biphenoxybenzophenone
* 6. 3,4'-diamino-4-biphenoxybenzophenone
* 7. 1,3-bis(3-amino-4-phenoxybenzoyl)benzene
* 8. 1,3-bis(3-amino-4-biphenoxybenzoyl)benzene
* 9. 3,3'-diaminobenzophenone
*10. 1,3-bis(3-aminobenzoyl)benzene
*11. 3,3',4,4'-benzophenonetetracarboxylic dianhydride
*12. pyromellitic dianhydride

Example 1

Polyimide obtained in Synthetic Example 1 was dissolved in N,N-dimethylformamide (DMF) in a concentration of about 30 % by weight. For 100 parts by weight of the polyimide powder, 40 parts by weight of carbon fiber HTA-C6 (manufactured by Toho Rayon Co.) was dispersed with stirring in the solution thus obtained. The resulting polyimide resin mixture was poured with vigorous stirring into methyl ethyl ketone which is about 15 times the weight of polyimide powder. The precipitate was filtered and dried at 200 °C for about 4 hours in a

nitrogen atmosphere to obtain a polyimide/carbon fiber mixture. The mixture thus obtained was melt-kneaded with a single screw extruder having 30 mm in diameter.

Delivered strand was air cooled and cut into pellets. The pellets were injection molded with an Arburg injection molding machine at injection pressure of 500 kg/cm$^2$, cylinder temperature of 410°C and mold temperature of 180°C to obtain JIS No.1 dumbbell specimens. The polyimide/carbon fiber mixture obtained above had moisture absorption of 0.73 %.

As mentioned above, the tensile test of the specimens were carried out at room temperature under dry state (hereinafter referred to as RT · DRY) and at high temperatures of 177°C and 204°C under moist state (hereinafter referred to as HOT · WET). Results are illustrated in Table 2 and indicate that tensile strength in HOT · WET is maintained at about 80 % of tensile strength in RT · DRY.

Examples 2~ 11

Polyimide powder obtained in Synthetic Examples 2 ~10 and 13 were used. Test specimens were prepared by carrying out the same procedures as Example 1. These specimens were used for the same tensile test as carried out in Example 1. Results are illustrated in Table 2 together with moisture absorption.

The results illustrate that tensile strength in HOT · WET is maintained at about 80 ~90 % of tensile strength in RT · DRY.

Comparative Examples 1 and 2

Polyimide powder obtained in Synthetic Examples 11 and 12 were insoluble in DMF. Thus, the resin mixture having equal ratio to that of Example 1 was prepared by using a drum blender (manufactured by Kawata Seisakusho Co.)

Test specimens were prepared by carrying out the same procedures as Example 1 and the same tensile test was conducted. Results are illustrated in Table 2 together with the results of moisture absorption.

The results illustrate that polyimide obtained in Synthetic Examples 11 and 12 maintains tensile strength in HOT · WET at about 60 % of tensile strength in RT · DRY.

Comparative Examples 3 and 4

Resin compositions outside the scope of the invention were prepared by using polyimide obtained in Synthetic Example 1. Specimens were prepared from the resin composition and tensile test was carried out by the same procedures as above. Results are illustrated in Table 2.

As compared with the case of using carbon fiber within the range of the invention, use of less amount led to reduction of tensile strength and use of excessive amount made injection molding impossible.

Table 2

| | Synthetic Example No. | Polyimide/Carbon fiber wt.part | Moisture absorption (%) | Tensile strength (kgf/mm²) *1 RT-DRY | 177 °C -WET | 204 °C -WET | Retention of tensile strength (%) 177 °C | 204 °C |
|---|---|---|---|---|---|---|---|---|
| Example 1 | 1 | 100/40 | 0.73 | 30.6 | 27.7 | 25.5 | 90.5 | 83.3 |
| 〃 2 | 2 | 100/40 | 0.83 | 30.4 | 27.0 | 25.7 | 88.8 | 84.5 |
| 〃 3 | 3 | 100/40 | 0.79 | 32.5 | 30.0 | 28.4 | 93.2 | 87.4 |
| 〃 4 | 4 | 100/40 | 0.64 | 30.3 | 29.1 | 28.0 | 96.0 | 92.4 |
| 〃 5 | 5 | 100/40 | 0.69 | 30.4 | 29.4 | 28.2 | 96.7 | 92.8 |
| 〃 6 | 6 | 100/40 | 0.68 | 32.2 | 30.0 | 28.8 | 93.2 | 89.4 |
| 〃 7 | 7 | 100/40 | 0.88 | 30.7 | 28.7 | 24.3 | 93.5 | 79.2 |
| 〃 8 | 8 | 100/40 | 0.92 | 29.2 | 27.9 | 23.6 | 95.5 | 80.8 |
| 〃 9 | 9 | 100/40 | 0.83 | 30.6 | 28.6 | 25.0 | 93.5 | 81.7 |
| 〃 10 | 10 | 100/40 | 0.88 | 29.0 | 27.9 | 23.1 | 96.2 | 79.7 |
| 〃 11 | 13 | 100/40 | 0.75 | 31.9 | 29.5 | 28.9 | 92.8 | 90.6 |
| Comparative Example 1 | 11 | 100/40 | 2.02 | 29.8 | 21.3 | 19.2 | 71.5 | 64.4 |
| 〃 2 | 12 | 100/40 | 1.91 | 29.3 | 20.1 | 17.1 | 68.6 | 58.4 |
| 〃 3 | 1 | 100/3 | - | 24.3 | no measurement | | | — |
| 〃 4 | 1 | 100/7 | - | injection molding impossible | | | | — |

Note :
* 1. RT · DRY : 18～25°C, moisture absorption 0.2 or less
* 2. 177 °C · WET : 177 °C, moisture absorption 0.6 ± 0.1 %
* 3. 204 °C · WET : 177 °C, moisture absorption 0.6 ± 0.1 %

Example 12

Polyimide used for the surface modifier composed of 3,3'-diamino-5,5'-phenoxybenzophenone as a diamine component and 3,3',4,4'-benzophenonetetracarboxylic dianhydride as an acid anhydride component, and had a η inh of 0.45 dℓ/g. Tg of 245 °C, flow initiation temperature of 325°C, melt viscosity at 380 °C of 13500 poise, and tensile shear strength of 332 kg/mm².

A polyimide solution was prepared by dissolving 20 g of polyimide in 80 g of N,N-dimethylformamide at room temperature in a nitrogen atmosphere. The polyimide solution obtained had viscosity of 5000 cps.

A woven fabric of carbon fiber (Toreca T300, KPL) was coated and impregnated with the polyimide solution.

Thereafter the impregnated woven fabric was heated to 170 °C for about 2 hours in a nitrogen atmosphere to remove the solvent. The woven fabric of carbon fiber impregnated with polyimide (prepreg sheet) had a degree of impregnation of about 10 % by weight.

Eight prepreg sheets were laminated and compression molded at 350 °C under pressure of 50 kg/cm$^2$ for 30 minutes to obtain a polyimide/carbon fiber composite having a thickness of about 2.5 mm. A cut surface of the composite obtained was inspected under an optical microscope. Voids and other defects were not observed. Flexural strength and flexural modulus of the composite were individually 89 kg/mm$^2$ and 7400 kg/mm$^2$ at 25 °C, and 81 kg/mm$^2$ and 6600 kg/mm$^2$ at 200°C .

Examples 13 ~22

Soluble polyimide obtained by using the diamine component and anhydride component as illustrated in Table 3 were used. Polyimide impregnated carbon fiber composite was prepared by carrying out the same procedures as described in Example 12. Table 3 illustrates diamine component and acid anhydride component ; inherent viscosity, glass transition temperature (Tg), flow initiation temperature, melt viscosity at 380 °C and tensile shear strength of polyimide powder ; viscosity of polyimide solution ; and presence or absence of voids, flexural strength and flexural modulus of composite.

Comparative Example 5

Polyimide composed of 3,3'-diaminobenzophenone as a diamine component and 3,3',4,4'-benzophenonetetracarboxylic dianhydride as an acid anhydride component and had an η inh of 0.44 dℓ/g and a glass transition temperature of 240°C, was tried to dissolve in N,N-dimethylformamide into a concentration of 20 % by weight as carried out in Example 12. However, the polyimide was quite insoluble and thus impregnation of fibrous reinforcement with the polyimide solution was impossible.

Comparative Example 6

The same carbon fiber woven fabric as used in Example 12 was melt-impregnated by hot-pressing at 350°C under pressure of 50 kg/mm$^2$ with the same polyimide powder as used in Comparative Example 5 which had a melt initiation temperature of 325 °C and melt viscosity at 380°C of 12000 poise to prepare a prepreg sheet.

Eight prepreg sheets thus obtained were laminated as carried out in Example 12 to obtaine a polyimide/carbon fiber composite having a thickness of about 2.5 mm. A cut surface of the composite obtained was inspected under an optical microscope. Voids were observed.

Flexural strength and flexural modulus of the composite were individually 63 kg/mm$^2$ and 5000 kg/mm$^2$ at 25 °C. Thus, mechanical properties of the composite were inferior to those of the polyimide/carbon fiber composite in the above examples.

Comparative Example 7

Polyimide composed of 1,3-bis(3-aminobenzoyl)benzene as a diamine component and 3,3',4,4'-benzophenonetetracarboxylic dianhydride as an acid anhydride component and had an η inh of 0.42 dℓ/g and a glass transition temperature of 228°C, was tried to dissolve in N,N-dimethylformamide into a concentration of 20 % by weight as carried out in Example 12. However, the polyimide was quite insoluble and thus impregnation of fibrous reinforcement with the polyimide solution was impossible.

Comparative Example 8

The same carbon fiber woven fabric as used in Example 12 was melt-impregnated by hot-pressing at 350°C under pressure of 50 kg/mm$^2$ with the same polyimide powder as used in Comparative Example 7 which had a melt initiation temperature of 310 °C and melt viscosity at 380°C of 8200 poise to prepare a prepreg sheet.

Eight prepreg sheets thus obtained were laminated as carried out in Example 12 to obtain a polyimide/carbon fiber composite having a thickness of about 2.5 mm.

A cut surface of the composite obtained was inspected under an optical microscope. Voids were observed.

Flexural strength and flexural modulus of the composite were individually 57 kg/mm$^2$ and 4800 kg/mm$^2$ at 25 °C.

Thus, mechanical properties of the composite were inferior to those of the polyimide/carbon fiber composite in the above examples.

Comparative Example 9

A marketed polyetherimide, ULTEM-1000(manufactured by General Electric Co., η inh = 0.60 dℓ/g) was used to carry out solution impregnation of a carbon fiber woven fabric by the same procedures as described in Example 12. However, polyetherimide had a relatively lower glass transition temperature of 216 °C.

Thus, heat-resistance and mechanical properties of the composite were inferior to those of the composite prepared in the the above examples.

Results are illustrated in Table 3.

Table 3

| | Diamine | Acid dianhydride | η inh (dl/g) | T g (℃) | FST *1 (℃) | Melt viscosity 380 ℃ (poise) | LSS *2 (kg/cm²) | Viscosity (cps) | Void | Flex. strength (kg/mm²) 25℃ (Retention) | Flex. strength (kg/mm²) 200℃ | Flex. modulus (kg/mm²) 25℃ (Retention) | Flex. modulus (kg/mm²) 200℃ |
|---|---|---|---|---|---|---|---|---|---|---|---|---|---|
| Example 12 | 3,3'-DABP-DPO *3 | BTDA *4 | 0.45 | 245 | 325 | 13500 | 332 | 5000 | no | 89 (91.0) | 81 | 7400 (89.2) | 6600 |
| ↑ 13 | 3,3'-DABP-MPO *5 | ↑ | 0.47 | 243 | 320 | 12400 | 325 | 5800 | ↑ | 85 (92.9) | 79 | 8100 (85.2) | 6900 |
| ↑ 14 | 3,4'-DABP-MPO *6 | ↑ | 0.44 | 266 | 340 | 15900 | 320 | 4700 | ↑ | 86 (89.5) | 77 | 7800 (83.3) | 6500 |
| ↑ 15 | 3,3'-DABP-DBO *7 | ↑ | 0.42 | 243 | 320 | 10800 | 316 | 4000 | ↑ | 83 (88.0) | 73 | 7200 (84.7) | 6100 |
| ↑ 16 | 3,3'-DPBP-MBO *8 | ↑ | 0.44 | 245 | 325 | 11700 | 302 | 5100 | ↑ | 84 (95.2) | 80 | 8000 (83.8) | 6700 |
| ↑ 17 | 3,3'-DABP-MBO *9 | ↑ | 0.45 | 259 | 340 | 13000 | 301 | 5100 | ↑ | 83 (90.4) | 75 | 7300 (82.2) | 6000 |
| ↑ 18 | 3,3'-DABP-DMO *10 | ↑ | 0.45 | 244 | 325 | 13200 | 328 | 5700 | ↑ | 86 (93.0) | 80 | 8200 (80.5) | 6600 |
| ↑ 19 | 3,3'-DABP-MMO *11 | ↑ | 0.48 | 246 | 320 | 12500 | 330 | 5800 | ↑ | 85 (89.4) | 76 | 8000 (80.0) | 6400 |
| ↑ 20 | 3,4'-DABP-MMO *12 | ↑ | 0.47 | 263 | 340 | 14800 | 304 | 5500 | ↑ | 84 (88.1) | 74 | 7600 (82.9) | 6300 |
| ↑ 21 | m,m-AMB-DPO *13 | ↑ | 0.47 | 233 | 315 | 9500 | 296 | 5400 | ↑ | 74 (87.8) | 65 | 7000 (84.3) | 5900 |
| ↑ 22 | m,m-AMB-DBO *14 | ↑ | 0.44 | 229 | 315 | 8900 | 290 | 4900 | ↑ | 77 (88.3) | 68 | 7300 (82.2) | 6000 |
| Compara. example 9 | G. E. 社 Ultem 1000 | | 0.60 | 216 | 295 | 5200 | 265 | 7000 | ↑ | 64 (82.8) | 53 | 5500 (81.8) | 4500 |

Note :

*1: Flow initiation temperature
*2: Tensile shear adhesive strength (23°C, 50%RH)
*3: 3,3'-diamino-4,4'-diphenoxybenzophenone
*4: 3,3',4,4'-benzophenonetetracarboxylic dianhydride
*5: 3,3'-diamino-4-phenoxybenzophenone
*6: 3,4'-diamino-4-phenoxybenzophenone
*7: 3,3'-diamino-4,4'-dibiphenoxybenzophenone
*8: 3,3'-diamino-4-biphenoxybenzophenone
*9: 3,4'-diamino-4-biphenoxybenzophenone
*10: 3,3'-diamino-4,4'-dimethoxybenzophenone
*11: 3,3'-diamino-4-methoxybenzophenone
*12: 3,4'-diamino-4-methoxybenzophenone
*13: 1,3-bis(3-amino-4-phenoxy)benzene
*14: 1,3-bis(3-amino-4-biphenoxy)benzene

Example 23

To a reaction vessel equipped with a stirrer, reflux condenser and a nitrogen inlet tube, 39.6 g (0.10 mol) of 3,3'-diamino-4,4'-diphenoxybenzophenone and 235 g of N,N'-dimethyl acetamide were charged and 31.2 g (0.97 mol) of 3,3',4,4'-benzophenonetetracarboxylic dianhydride was added by portions with caution to prevent temperature rise of the solution. The mixture was stirred for about 20 hours at room temperature. The polyamic acid solution thus obtained was further dilutes with N,N-dimethylacetamide to a concentration of 5 % by weight.

Successively, an acrylic carbon fiber bundle, HTA (Trade Mark of Toho Rayon Co.) having 12000 filaments was immersed into the above polyamic acid solution at a rate of 60 m/min, dried by heating at 130 °C for 60 minutes, and further heated in a nitrogen atmosphere at 260 °C for an hour to carry out imidization.

A carbon fiber built up 3 % by weight of the polyimide resin on the surface was thus obtained. The surface-modified carbon fiber obtained was successively cut into a length of 3 mm to obtain chopped strand.

After dry blending 30 % by weight of the chopped strand with 70 % by weight of a thermoplastic resin, AURUM #450 (Trade Mark of Mitsui Toatsu Chemicals In.), the blend was melt kneaded and extruded at 400°C with an extruder having a diameter of 40 mm to obtain uniformly blended pellets. Dumbbell test specimens were prepared by injection molding the pallets at a cylinder temperature of 400°C and a mold temperature of 210°C. The specimens had a tensile strength of 3350 kg/cm$^2$ at a pull rate of 5 mm/min.

Example 24

Dumbbell specimens were prepared by carrying out the same procedures as described in Example 23 except that 0.888 g (0.006 mol) of phthalic anhydride was further added.

The specimens thus obtained had a tensile strength of 3400 kg/cm$^2$ .

Example 25

To a reaction vessel equipped with a stirrer, reflux condenser and a nitrogen inlet tube, 39.6 g (0.10 mol) of 3,3'-diamino-4,4'-diphenoxybenzophenone, 31.2 g (0.097 mol) of 3,3',4,4'-benzophenonetetracarboxylic dianhydride, 0.888 g (0.006 mol) of phthalic anhydride, 0.93 g of γ-picoline, 184 g of N-methyl-2-pyrrolidone and 36 g of xylene were charged. The mixture was heated to 180°C in a nitrogen atmosphere and stirred for 6 hours at the temperature while distilling out about 3 ml of water. The polyimide solution thus obtained were further diluted to 5 % by weight with N-methyl-2-pyrrolidone.

Successively, an acrylic carbon fiber bundle, HTA (Trade Mark of Toho Rayon Co.) having 12000 filaments was immersed into the above polyimide solution at a rate of 60 m/min, and dried by heating at 130 °C for 60 minutes and at 200°C for 60 minutes. A carbon fiber built up 3 % by weight of the polyimide resin on the surface was thus obtained. The surface-modified carbon fiber thus obtained was successively cut into a length of 3 mm to obtain chopped strand.

After dry blending 30 % by weight of the chopped strand with 70 % by weight of a thermoplastic polyimide resin, AURUM #450 (Trade Mark of Mitsui Toatsu Chemicals Inc.), the blend was melt kneaded and extruded at 400 °C with an extruder having a diameter of 40 mm to obtain uniformly blended pellets. Dumbbell test specimens were prepared by injection molding the pellets at a cylinder temperature of 400°C and a mold temperature of 210°C. The specimens had a tensile strength of 3330 kg/cm² at a pull rate of 5 mm/min.

Example 26~32

Surface modifiers were prepared by carrying out the same procedures as described in Example 25 except that 3,3',4,4'-benzophenonetetracarbox ylic dianhydride was replaced by other various tetracarboxylic dianhydrides.

Dumbbell specimens were prepared from these surface modifiers by conducting the same procedures as described in Example 25. Tensile strength of the specimens were measured and results are summarized in Table 4.

Table 4

| Example | Tetracarboxylic dianhydride | Tensile strength (kg/cm²) |
|---|---|---|
| 26 | BPDA *1) | 3360 |
| 27 | ODPA *2) | 3270 |
| 28 | SODA *3) | 3250 |
| 29 | HQDA *4) | 3150 |
| 30 | BisADA *5) | 3130 |
| 31 | 6FDA *6) | 3200 |
| 32 | PMDA *7) | 3000 |

Note :

* 1 : 3,3',4,4'-biphenyltetracarboxylic dianhydride
* 2 : 3,3',4,4'-diphenylethertetracarboxylic dianhydride
* 3 : 3,3',4,4'-diphenylsulfonetetracarboxylic dianhydride
* 4 : 1,4-bis(3,4-dicarboxyphenoxy)benzene dianhydride
* 5 : 2,2-bis[3,4-dicarboxyphenoxy)phenyl]propane dianhydride
* 6 : 2,2-bis[3,4-dicarboxyphenoxy)phenyl]-1,1,1,3,3,3-hexafluoropropane dianhydride
* 7 : pyromellitic dianhydride

Comparative Example 10

The carbon fiber which was surface-modified with polyimide of the invention was replaced by an acrylic

carbon fiber, HTA (Trade Mark of Toho Rayon Co.) which was surface-modified with epoxy resin. Dumbbell specimens were prepared by carrying out the same procedures as described in Example 23. The specimens had a tensile strength of 2300 kg/cm$^2$ .

Comparative Example 11

The carbon fiber which was surface-modified with polyimide of the invention was replaced by an acrylic carbon fiber, HTA (Trade Mark of Toho Rayon Co.) which was surface-modified with polyetherimide, ULTEM 1000 (Trade Mark of Engineering Plastics Co.). Dumbbell specimens were prepared by carrying out the same procedures as described in Example 25.

The specimens had a tensile strength of 2250 kg/cm$^2$ .

## Claims

**1)** A polyimide-based resin composition comprising polyimide having a requisite recurring structural unit consisting of one or more recurring structural units of the formula (1) :

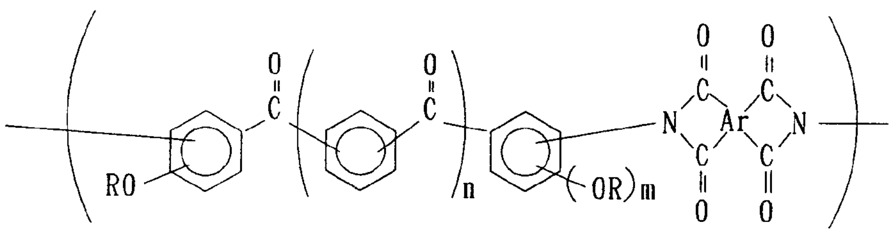

( 1 )

wherein m and n are individually an integer of 0 or 1, and R is

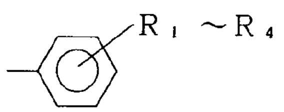

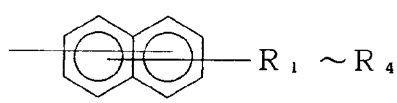

,

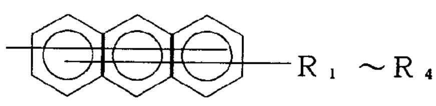

or

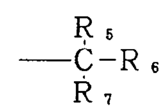

wherein $R_1$ , $R_2$, $R_3$ and $R_4$ are individually a hydrogen atom, halogen atom, alkyl having 1~8 carbon atoms, aryl, alkenyl, aralkyl or alkoxy having 1 ~ 5 carbon atoms ; $R_5$ , $R_6$ and $R_7$ are individually a hydrogen atom, alkyl having 1~8 carbon atoms, aryl, alkenyl, aralkyl or ω-alkyloxyoligo-(alkyleneoxy)alkyl having 1~10 carbon atoms and 1 ~ 3 oxygen atoms ; and Ar is a tetravalent radical having 6~27 carbon atoms and is a monoaromatic radical, condensed polyaromatic radical or noncondensed aromatic radical connected to each other with a direct bond or a bridge member, and a fibrous reinforcement.

**2)** A polyimide-based resin composition of claim 1 wherein the polyimide is a polyimide copolymer comprising recurring structural units of the formula (2) :

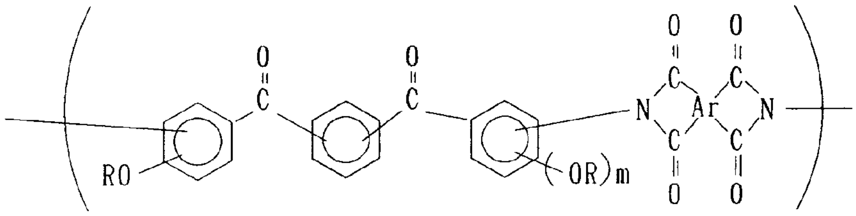

(2)

wherein m is an integer of 0 or 1, and R is

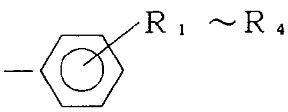

,

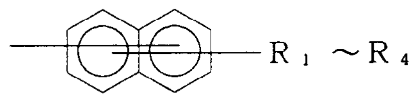

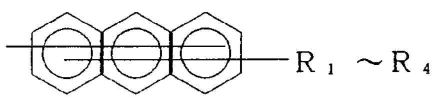

or

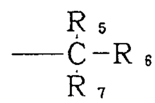

wherein $R_1$, $R_2$, $R_3$ and $R_4$ are individually a hydrogen atom, halogen atom, alkyl having 1~8 carbon atoms, aryl, alkenyl, aralkyl or alkoxy having 1 ~ 5 carbon atoms ; $R_5$, $R_6$ and $R_7$ are individually a hydrogen atom, alkyl having 1~8 carbon atoms, aryl, alkenyl, aralkyl or ω-alkyloxyoligo-(alkyleneoxy)alkyl having 1~10 carbon atoms and 1 ~ 3 oxygen atoms ; and Ar is a tetravalent radical having 6~27 carbon atoms and is a monoaromatic radical, condensed polyaromatic radical or noncondensed aromatic radical connected to each other with a direct bond or a bridge member, and recurring structural units of the formula (3) :

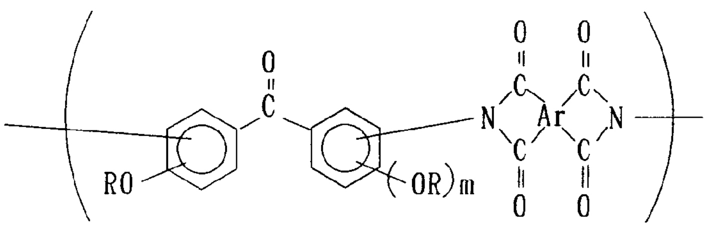

(3)

wherein m is an integer of 0 or 1, and R is

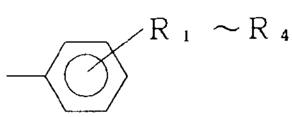

,

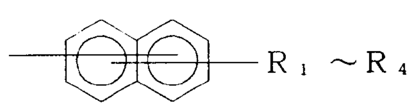

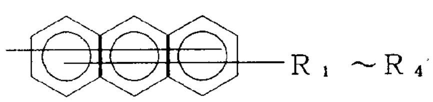

or

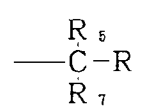

wherein $R_1$, $R_2$, $R_3$ and $R_4$ are individually a hydrogen atom, halogen atom, alkyl having 1~8 carbon atoms, aryl, alkenyl, aralkyl or alkoxy having 1 ~ 5 carbon atoms ; $R_5$, $R_6$ and $R_7$ are individually a hydrogen atom, alkyl having 1~8 carbon atoms, aryl, alkenyl, aralkyl or ω-alkyloxyoligo-(alkyleneoxy)alkyl having 1~10 carbon atoms and 1 ~ 3 oxygen atoms ; and Ar is a tetravalent radical having 6~27 carbon atoms and is a monoaromatic radical, condensed polyaromatic radical or noncondensed aromatic radical connected to each other with

a direct bond or a bridge member.

**3)** A polyimide-based resin composition of claim 1 wherein the polyimide is a mixture of polyimide having recurring structural units of the above formula (2) and polyimide having recurring structural units of the above formula (3).

**4)** A polyimide-based resin composition of any one of the preceding claims wherein the polyimide is or comprises an end-capped polyimide which is capped at the polymer chain end in the preparation of used polyimide by progressing the reaction in the presence of an aromatic dicarboxylic anhydride of the formula (4) :

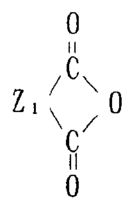

(4)

where $Z_1$ is a divalent radical having 6 ~ 15 carbon atoms and is a monoaromatic radical, condensed polyaromatic radical or noncondensed aromatic radical connected to each other with a direct bond or a bridge member and/or aromatic monoamine of the formula (5) :

$$Z_2 - NH_2 \qquad (5)$$

wherein $Z_2$ is a monovalent radical having 6 ~ 15 carbon atoms and is a monoaromatic radical, condensed polyaromatic radical or noncondensed aromatic radical connected to each other with a direct bond or a bridge member.

**5)** A polyimide-based resin composition of any one of the preceding claims wherein the fibrous reinforcement is carbon fiber, glass fiber, aromatic polyamide fiber and/or potassium titanate fiber.

**6)** A polyimide-based resin composition of any one of the preceding claims wherein the fibrous reinforcement is comprised in an amount of 0.5~65 parts by weight for 100 parts by weight for 100 parts by weight of polyimide of the formula (1).

**7)** A preparation process of polyimide-based resin composition of any one of the preceding claims wherein the polyimide is dissolved in an organic solvent, the resultant solution is mixed with the fibrous reinforcement and the solvent is successively removed from the mixture.

**8)** A preparation process of polyimide-based resin composition of claim 7 wherein the organic solvent is a halogenated hydrocarbon solvent, amide-base solvent and/or a phenol-base solvent.

**9)** An injection molded article obtained from the polyimide-based resin composition of any one of the preceding claims.

**10)** A polyimide-based laminated composite obtainable by dissolving polyimide of the above formula (1) in an organic solvent, impregnating fibrous reinforcement with the resulting solution, removing the organic solvent, successively heating the impregnated fibrous reinforcement above the melt-flow temperature of the polyimide and applying pressure in a mold.

**11)** A fibrous reinforcement surface-modified with the polyimide of the above formula (1).